Europäisches Patentamt

**European Patent Office**

**Office européen des brevets**

(19)

(11) Veröffentlichungsnummer: **0 037 869**
**A1**

(12)

# EUROPÄISCHE PATENTANMELDUNG

(21) Anmeldenummer: **80730049.6**

(22) Anmeldetag: **22.07.80**

(51) Int. Cl.³: **H 01 B 13/06**

(30) Priorität: **11.04.80 DE 3014399**

(43) Veröffentlichungstag der Anmeldung: **21.10.81**
**Patentblatt 81/42**

(84) Benannte Vertragsstaaten: **AT CH FR GB IT LI NL SE**

(71) Anmelder: **SIEMENS AKTIENGESELLSCHAFT Berlin
und München, Postfach 22 02 61,
D-8000 München 22 (DE)**

(72) Erfinder: **Bäuerlein, Rudolf, Dipl.-Phys.,
P.-Gossen-Strasse 107, D-8520 Erlangen (DE)**
Erfinder: **Bickel, Hans-Dieter, Dipl.-Ing., Buchenweg 18,
D-8631 Ahorn (DE)**
Erfinder: **Schröder, Manfred, Ing.grad.,
Kienhorststrasse 145, D-1000 Berlin 51 (DE)**

(54) **Vorrichtung zur Strahlenvernetzung.**

(57) Bei der Bestrahlung von nebeneinander geführten Leitungen oder Kabeln (8) mit energiereichen Strahlen eines Elektronenbeschleunigers (11) bildet der durch eine Ablenkeinrichtung erzeugte Strahlenfächer (12) und damit ein Strahlenfeld (22) gegenüber der Laufrichtung (15) einen von 0° abweichenden Winkel, damit die Energieaufnahme der plastischen Isolierungen aus Kautschuk oder Polyolefinen oder anderen vernetzbaren Polymeren aller nebeneinander geführten Leitungen oder Kabel gleichmäßig ist.

ACTORUM AG

SIEMENS AKTIENGESELLSCHAFT
Berlin und München

Unser Zeichen
VPA 80 P 4716 DE

00 37 869

## Vorrichtung zur Strahlenvernetzung

Die Erfindung bezieht sich auf eine Vorrichtung zur Strahlenvernetzung der aus Kautschuk, Polyolefinen oder anderen vernetzbaren Polymeren bestehenden Isolierung elektrischer Leitungen oder Kabel mit energiereichen Strahlen, wobei mindestens zwei parallel geführte Leitungen oder Kabel unter einer Strahlenquelle mit einem sektorförmig aufgefächerten Strahlengang hindurchgeführt werden. Bei den parallel geführten Leitungen oder Kabel kann es sich selbstverständlich auch um Teile eines Leitungs- oder Kabelstranges handeln.

Zur Verbesserung der thermischen Stabilität elektrischer Isoliermassen für Leitungen oder Kabel ist es üblich, Kautschuk- oder Polyolefinisolierungen zu vulkanisieren oder zu vernetzen, wobei die Vernetzung meist auf chemischem Wege bewirkt wird, indem dem Extrudat Zuschlagstoffe, z. B. Peroxyde, beigemengt werden, die unter geeigneten physikalischen Bedingungen den Vernetzungsvorgang einleiten. In Konkurrenz hierzu besteht die Möglichkeit, die Vernetzung auf physikalischem Wege durch Bestrahlung mit energiereichen Strahlen ($\alpha$-, $\beta$- oder $\gamma$-Strahlen) zu erzielen. Aus einer Reihe von Gründen eignen sich für die technische Anwendung vorzugsweise $\beta$-, also Elektronenstrahlen (DE-AS 10 00 076). Eine ausreichende Vernetzung wird dabei je nach Material und Qualität mit Strahldosen zwischen 10 und 500 kJ/kg erzielt.

Die Problematik bei der Strahlenvernetzung elektrischer Leitungen der Kabel mit Elektronenstrahlen besteht in erster Linie in der Dosierung, weil sich die für den Ver-

Gre 3 Un / 10.04.1980

netzungsprozeß maßgebende, absorbierte Energie mit der Eindringtiefe in die Isolierung ändert. Die Problematik wird außerdem durch die Schattenwirkung des Leiters verstärkt, die dazu zwingt, den Leiter oder das Kabel von mindestens zwei Seiten zu bestrahlen. Aber auch bei der zweiseitigen Bestrahlung ergibt sich noch eine inhomogene Verteilung der Strahlendosis und somit des Vernetzungsgrades in der Isolierung. Um die Vernetzung soweit wie möglich zu vergleichmäßigen, sind daher schon Anordnungen bekannt (DE-AS 20 58 044 und CH-PS 539 932), bei denen der Leiter oder das Kabel viermal die Strahlenquelle passiert und dabei jeweils um 90° gedreht wird. Letzteres bedingt besonders bei größeren Querschnitten einen erheblichen maschinenbaulichen Aufwand.

Ferner ist aus der DE-OS 26 06 242 bekannt, insbesondere für Sektorleiter, dadurch nur mit einem zweimaligen Passieren der Strahlenquelle ohne Verdrehung des Leiters oder des Kabels bei einer weitgehend homogenen Verteilung der Strahlendosis und damit des Vernetzungsgrade in der Isolierung auszukommen, indem zwei etwa unter 90° gegeneinander geneigte Strahlenquellen verwendet werden und die Leitung oder das Kabel derart unter den Strahlenquellen hindurchgeführt werden, daß beide Beschleuniger etwa um 45° gegenüber der zur Laufrichtung der Leitung oder Kabels senkrechten Ebene geneigt sind und die Passage wiederholt wird, nachdem die Leitung oder das Kabel um 180° umgelenkt wurde.

Der Aufwand bei der Strahlenvernetzung ist groß. Neben dem kostspieligen Beschleuniger ist eine Bestrahlungskammer mit extrem dicken Wänden als Strahlenschutz erforderlich. Außerdem müssen Absaugvorrichtungen für das relativ konzentriert auftretende Ozon vorgesehen werden. Aus wirtschaftlichen Gründen ist man daher bestrebt, mindestens zwei Leitungen oder Kabel oder von einer Leitung oder einem Kabel mehrere Abschnitte gleichzeitig unter der Strahlenquelle hindurchzuführen. Dies ist auch deshalb vorteilhaft, weil der durch einen Scanner bewirkte Strahlenfächer eines Beschleunigers im allgemeinen solche Dimensionen aufweist, daß seine Breite größer als der Durchmesser einer zu vernetzenden Leitung oder eines Kabels ist.

Die Intensitätsverteilung über die Breite eines Strahlenbündels folgt näherungsweise der bekannten Gauß'schen Verteilungskurve. Bei mehreren nebeneinander geführten Leitungen oder Kabel hat das zur Folge, daß die einzelnen Leitungen oder Kabel unterschiedliche Vernetzungsenergien aufnehmen. Der Erfindung liegt daher die Aufgabe zugrunde, eine Anordnung der Strahlenquelle bzw. der Strahlenquellen anzugeben, die eine gleichmäßige Aufteilung der Vernetzungsenergie auf alle nebeneinander geführten Leitungen oder Kabel ermöglicht.

Diese Aufgabe wird gemäß der Erfindung dadurch gelöst, daß die Strahlenquelle derart angeordnet ist, daß die Mittellinie des Strahlenbündels (Strahlenfächer) mit der Laufrichtung der Leitungen oder Kabel einen von 0° abweichenden Winkel bildet.

Dadurch wird eine gleichmäßigere Aufteilung der Vernetzungsenergie auf die parallel geführten Leitungen oder Kabel erreicht, weil auf die Länge des Strahlenfächers die einzelnen Leitungen oder Kabel alle Breitenbereiche des Strahlenfächers passieren, die unterschiedlich große Vernetzungsenergieen empfangen. Außerdem wird so eine zu starke Erwärmung einzelner Leitungen oder Kabel vermieden.

Je nach den Dimensionen der Strahlenquelle und der Zahl der nebeneinander geführten Leitungen oder Kabel wird man den Winkel der Mittelebene des Strahlenbündels zwischen ein und zwanzig Grad wählen. Dabei wird man den maximalen Verdrehwinkel $\alpha$ so bemessen, daß dessen Wert das 1- bis 1,2fache von $\text{arctg}\left(\dfrac{\text{Summe der Breite aller parallelen Leitungen}}{\text{Länge des Scanners}}\right)$ beträgt.

Bei Vorrichtungen mit mindestens zwei Strahlenquellen, bei denen die Mittelebenen ihrer Strahlenbündel gegenüber der Bestrahlungsebene der Leitungen oder Kabel geneigt sind (z. B. um je 45° bei zwei Strahlungsquellen) wird man die Anordnung vorzugsweise so treffen, daß die Strahlenquellen derart angeordnet sind, daß jede Hauptachse der Strahlenbündel gegenüber der zur Laufrichtung der Leitungen oder Kabel Senkrechten geneigt sind. Wenn man nebeneinander liegende, in einer Ebene geführte Leitungen oder Kabel mit Strahlenquellen bestrahlt, bei denen die Mittelebenen der Strahlenbündel gegenüber der Senkrechten zur Bestrahlungsebene geneigt sind und wenn man die Strahlenquellen dabei so anordnet, daß die Mittellinie eines jeden Strahlenbündels (die der Linie maximaler Energie in dieser Ebene entspricht) mit der Laufrichtung der Leitungen oder Kabel einen von 0° abweichenden Winkel bildet, dann differieren die Entfernungen von der Strahlenquelle zu den einzelnen Punkten der bestrahlten Ebene (die durch die nebeneinander geführten Leitungen oder Kabel repräsentiert wird) in der Weise, daß - in Laufrichtung der Leitungen oder Kabel gesehen - die Entfernungen je nach der Drehrichtung zu- oder abnehmen. Durch eine geringfügige Neigung der Hauptachse des Strahlenbündels kann diese Differenz weitgehend ausgeglichen werden, so daß sich eine annähernd gleichmäßige Energieverteilung in der bestrahlten Ebene ergibt. Die Größe des Neigungswinkels wird man je nach den vorliegenden Gegebenheiten etwa zwischen 1 und 10° wählen.

Die Erfindung wird anhand der in der Zeichnung schematisch dargestellten und nachfolgend beschriebenen Ausführungsbeispiele im einzelnen erläutert. In der Zeichnung zeigt:
Fig. 1 die Bestrahlung mit einem Scanner,
Fig. 2 das Strahlenfeld bei Anordnung eines Scanners gemäß der Erfindung,
Fig. 3 die Bestrahlung mit zwei um 90° versetzten Scannern,
Fig. 4 die Bestrahlung bei zwei um 90° versetzten und gemäß der Erfindung angeordneten Scannern,

Fig. 5 das Strahlenfeld von zwei Scannern bei Anordnung
nach Fig. 4,

Fig. 6 bis 8 Schnitte längs der Linien VI-VI, VII-VII
und VIII-VIII in Fig. 4,

Fig. 9 die Bestrahlung analog Fig. 4, jeweils mit gekippter Scanner-Mittellinie,

Fig. 10 das Strahlenfeld von zwei Scannern bei Anordnung
nach Fig. 9.


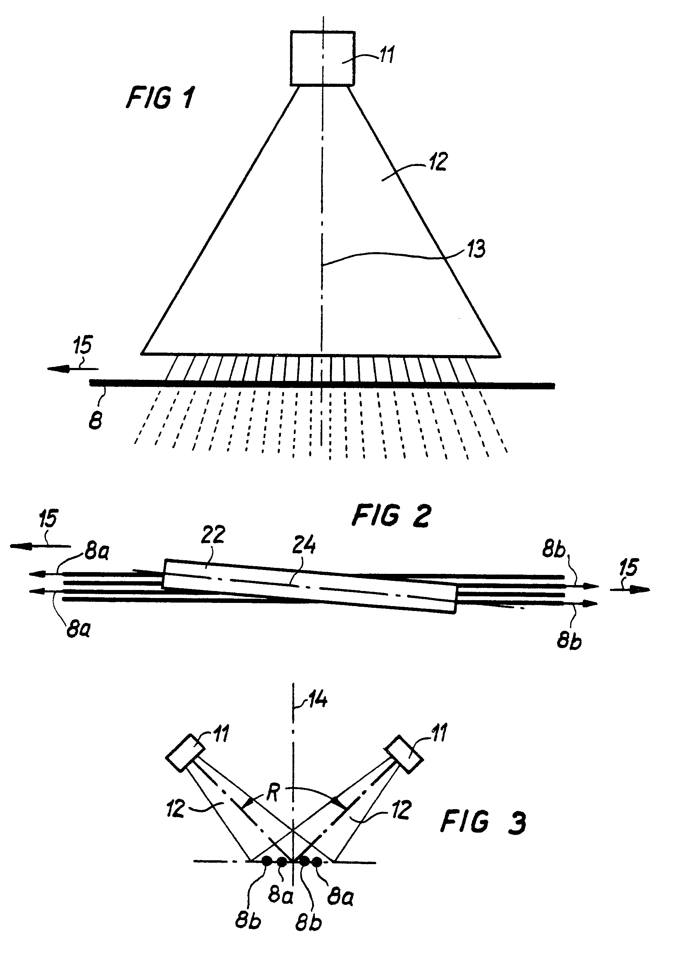

Fig. 1 zeigt schematisch die Anordnung bei der Bestrahlung von Leitern 8, deren Isolierung mit schnellen
Elektronen vulkanisiert bzw. vernetzt wird. Die Strahlenquelle, ein Elektronenbeschleuniger 11, befindet sich dabei senkrecht oberhalb der Ebene, die durch die parallel
geführten Leiter 8 bestimmt wird. Um den an sich nahezu
punktförmigen Elektronenstrahl des Beschleunigers 11 auf
die Fläche eines schmalen Rechteckes zu spreizen, ist
mit dem Beschleuniger üblicherweise eine Ablenkeinrichtung gekoppelt, die als Scanner bezeichnet wird. Nachfolgend wird damit stets der damit erzeugte schmale
'Strahlenkegel' 12 bezeichnet. Die Scanner-Mittellinie
13 steht senkrecht auf dieser Ebene.


Aus Wirtschaftlichkeitsgründen werden meist mehrere
Leiter 8 gleichzeitig nebeneinander unter der Strahlenquelle hindurchgeführt. Weil die Bestrahlung dabei schon
wegen der 'Schatten'-Wirkung der metallischen Leiter weitgehend einseitig erfolgt, werden die Leiter im allgemeinen durch geeignete Umlenkeinrichtungen mehrfach unter
der Strahlenquelle hindurchgeführt. Dies ist in Fig. 2
im Falle einer Leitung 8, die viermal die Strahlenquelle
passiert, angedeutet, wobei der Index a die Leitung bei
der ersten Passage und b die Leitung bei der zweiten Passage nach einer Umlenkung um 180° usw. bezeichnet. Dabei
bildet der Scanner und damit sein Strahlenfeld 22 mit der
Laufrichtung 15 einen von 0° abweichenden Winkel, der im
allgemeinen Werte zwischen 1° und 20° annimmt. Auf diese

0037869

Weise werden alle Leitungen einmal durch die Zone stärkster Energie geführt, die durch die Mittellinie 24 des
Strahlenfeldes 22 symbolisiert ist.

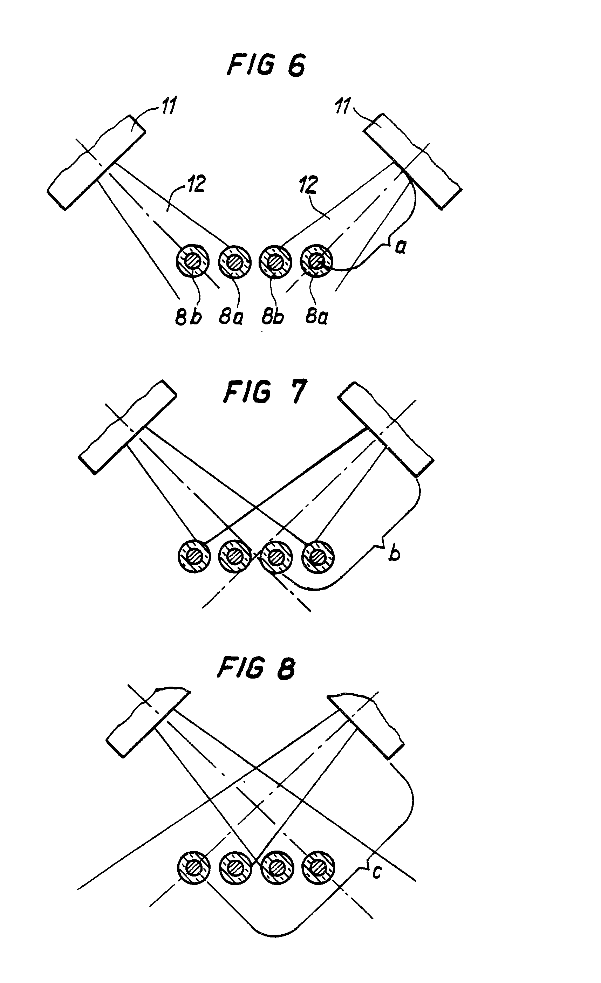

Bei der Bestrahlung von Leitungen mit schnellen Elektronen werden häufig zwei Strahlenquellen 11 verwendet, die
gegeneinander um 90° versetzt sind und gegenüber Senkrechten 14 zur Ebene der Leitungen 8 einen Winkel von etwa
45° bilden. Die Strahlenquellen sind dabei in Laufrichtung 15 der Leitungen hintereinander angeordnet (Fig. 3).

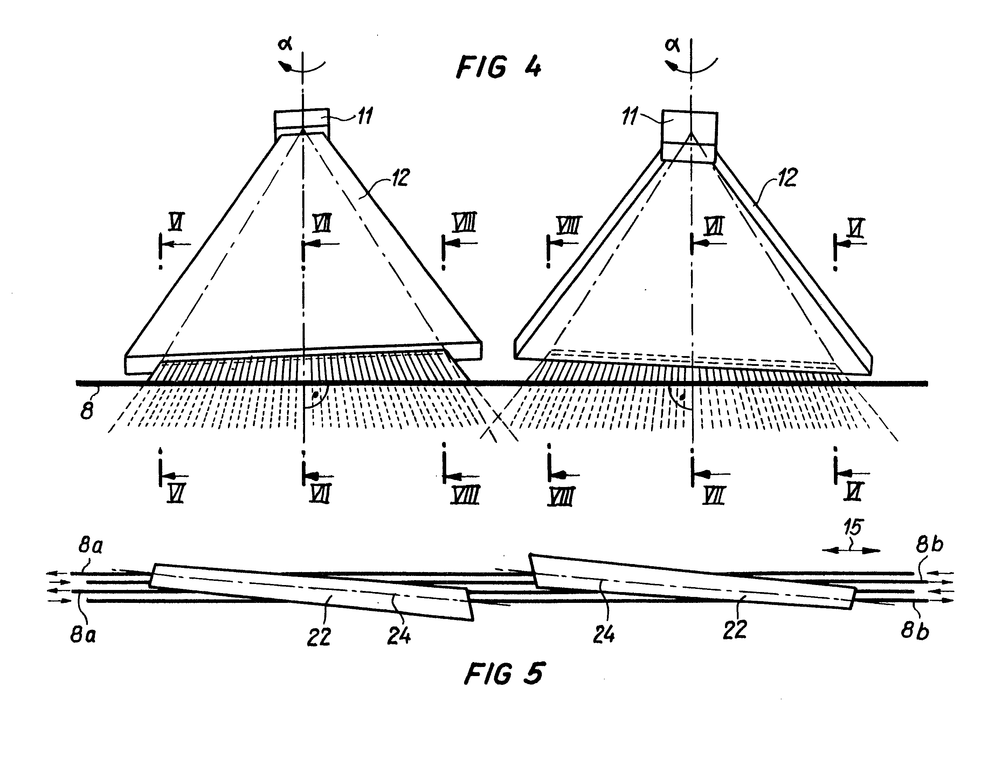

Fig. 4 zeigt eine solche Anordnung von zwei hintereinanderliegenden Scannern 12, die jeweils um einen kleinen
Winkel $\alpha$ gedreht sind, so daß ihre Strahlenfelder 22
analog Fig. 2 gegenüber der Laufrichtung 15 der Leitungen
einen von 0° abweichenden Winkel bilden (Fig. 5).

In den Figuren 6 bis 8 sind Schnitte längs der Linien
VI-VI, VII-VII und VIII-VIII in der Figur 4 dargestellt,
die klar erkennen lassen, daß der Abstand a, b bzw. c
der Leitungen 8a und 8b, wenn sie die Mittellinie 24 des
Strahlenfeldes 22 passieren, unterschiedlich ist, so daß
auch die von den Leiterisolierungen aufgenommene Vernetzungsenergie schwankt.

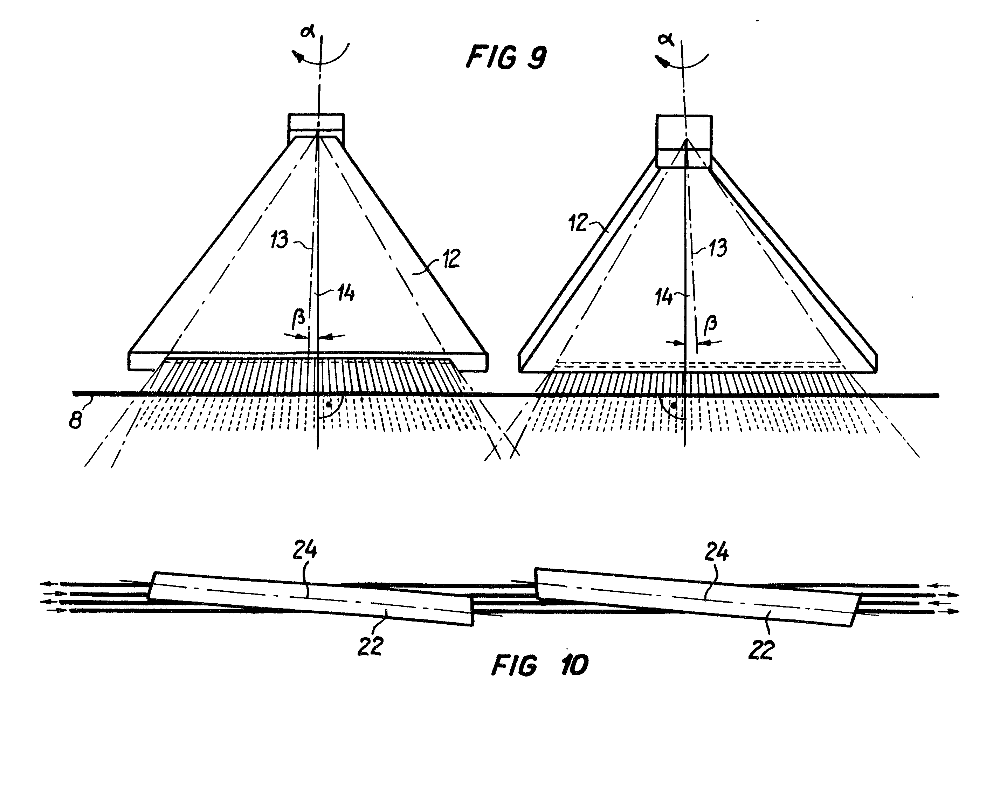

Diese Schwankung der Abstände a, b und c wird ausgeglichen, wenn man die Mittellinien 13 beider Scanner 12 um
einen kleinen Winkel ß gegenüber der Senkrechten 14 zur
Laufrichtung 15 der Leitungen kippt (Figuren 9 und 10).

Um optimale Bestrahlungsbedingungen zu schaffen, kann man
die Gegenstände dieser Erfindung mit der Maßnahme kombinieren, die Gegenstand der Patentanmeldung P 30 .. ...
(VPA 80 P 4717 DE) vom gleichen Anmeldetage ist.

4 Ansprüche
10 Figuren

Patentansprüche

1. Vorrichtung zur Strahlenvernetzung der aus Kautschuk, Polyolefinen oder anderen vernetzbaren Polymeren bestehenden Isolierung elektrischer Leitungen oder Kabel mit energiereichen Strahlen, wobei mindestens zwei parallel geführte Leitungen oder Kabel unter einer Strahlenquelle mit einem sektorförmig aufgefächerten Strahlengang hindurchgeführt werden, d a d u r c h   g e k e n n - z e i c h n e t ,   daß die Strahlenquelle (11, 12) derart angeordnet ist, daß die Mittellinie (24) des Strahlenbündels (Strahlenfächer) mit der Laufrichtung (15) der Leitungen oder Kabel (8) einen von 0° abweichenden Winkel bildet.

2. Vorrichtung nach Anspruch 1, d a d u r c h   g e - k e n n z e i c h n e t ,   daß der Winkel etwa 1° bis 20° beträgt.

3. Vorrichtung nach Anspruch 1 mit mindestens zwei Strahlenquellen, bei denen die Mittelebenen ihrer Strahlenbündel gegenüber der Senkrechten zur Bestrahlungsebene der Leitungen oder Kabel geneigt sind (bei zwei Strahlenquellen um je etwa 45°), d a d u r c h   g e - k e n n z e i c h n e t ,   daß die Strahlenquellen (11, 12) derart angeordnet sind, daß jede Hauptachse (13) der Strahlenbündel gegenüber der zur Laufrichtung (15) der Leitungen oder Kabel Senkrechten (14) geneigt ist.

4. Vorrichtung nach Anspruch 3, d a d u r c h   g e - k e n n z e i c h n e t ,   daß die Neigung etwa 1° bis 10° beträgt.

FIG 1

FIG 2

FIG 3

FIG 4

FIG 5

FIG 6

FIG 7

FIG 8

FIG 9

13  14  β  12

12  13  14  β

8

FIG 10

24  24

22  22

80 P 4716  4/4

0037869

# EUROPÄISCHER RECHERCHENBERICHT

Europäisches
Patentamt

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| X | P.J.C.A.SIMONIS, THE USE OF ELEC-TRON RADIATION TO CROSSLINK CABLE AND WIRE ISOLATIONS, HIGH VOLTAGE ENGINEERING (EURORA) N.V., Amersfoort, Mai 1972 <br><br> + Seite 28, Fig.14; Seite 30, 2.Absatz + <br><br> -- | 1,2 | H 01 B 13/06 |
| | US - A - 3 104 321 (SMITH) <br><br> + Fig. 2 + <br><br> ---- | 3,4 | |

RECHERCHIERTE SACHGEBIETE (Int. Cl.³)

H 01 B 13/00

B 29 H 5/00

C 08 J 3/00

KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| WIEN | 16-06-1981 | KUTZELNIGG |

EPA form 1503.1 06.78